# EUROPÄISCHE PATENTANMELDUNG

(11) **EP 0 952 454 A1**
(43) Veröffentlichungstag der Anmeldung: **27.10.1999**
(21) Anmeldenummer: 99105701.9
(22) Anmeldetag: 20.03.1999
(51) Int. Cl.: G01P 3/48, F02P 5/152

(54) **Vorrichtung zur Drehzahlerfassung von Turboladern**

(30) Priorität: 23.04.1998 DE 19818124
(71) Anmelder: DaimlerChrysler AG, 70567 Stuttgart (DE)
(72) Erfinder: Fekete, Nicholas, Dr., 70734 Fellbach (DE); Finger, Karsten, 70378 Stuttgart (DE); Welte, Lothar, Dr., 72351 Geislingen (DE)

(57) **Zusammenfassung**

Es wird eine Vorrichtung zur Drehzahlerfassung von Turboladern an Brennkraftmaschinen vorgeschlagen, die mit wenigstens einem am Turbolader fixierten piezoelektrischen Beschleunigungsaufnehmer (10) und mit einer eine analoge Filteranordnung (13) zur Filterung der Ausgangssignale des Beschleunigungsaufnehmers (10) aufweisenden Auswerteschaltung (11) versehen ist. Die Ausgangssignale der Filteranordnung (13) werden über einen Frequenz-Spannungs-Wandler (15) in Form einer analogen Spannung oder direkt in Form von Frequenzsignalen als Eingangssignale einem elektronischen Steuergerät (17) der Brennkraftmaschine oder einem Meß- und/oder Angezigegerät zugeführt. Dadurch kann die Drehzahl von Turboladern kostengünstig mit einer kleinen und robusten Vorrichtung erfaßt werden, die für die Massenfertigung geeignet ist, wobei keine baulichen Veränderungen am Turbolader erforderlich sind.

## Beschreibung

Die Erfindung betrifft eine Vorrichtung zur Drehzahlerfassung von Turboladern an Brennkraftmaschinen mittels eines piezoelektrischen Beschleunigungsaufnehmers.

Eine einfache und zuverlässige Erfassung der Turboladerdrehzahl unter allen Betriebsbedingungen (Last und Drehzahl) ist die grundlegende Voraussetzung für den effizienten Betrieb einer modernen Brennkraftmaschine mit Turbolader. Die erfaßte Drehzahl kann dann als Steuergröße für die Regelung des Turboladers und des gesamten Kennfeldes im Laderbetrieb des Motors verwendet werden. Aufgrund der Erfassung der Drehzahl ist es möglich, den Turbolader an seiner maximalen Drehzahlgrenze zu betreiben und eine eventuelle Zerstörung durch Überdrehzahl zu verhindern. Regelungstechnische Eingriffe in die gesamte Motorsteuerung werden dadurch möglich.

Bekannte Anordnungen zur Erfassung der Turboladerdrehzahl beruhen auf optischen und induktiven Verfahren, die einen erheblichen Aufwand bei der Implementierung verlangen. So werden bekannterweise die Laderschaufeln oder zusätzlich angebrachte Impulsräder auf der Turboladerwelle fotoelektrisch oder induktiv abgetastet und in einer nachgeschalteten hochwertigen Auswerteelektronik ausgewertet.

Aus der DD 257 126 und der DD 269 683 ist es bekannt, piezoelektrische Beschleunigungsaufnehmer am Gehäuse von rotierenden Maschinen anzubringen, um auf diese Weise die Drehzahl zu erfassen. Zur Auswertung der im Beschleunigungsaufnehmer erfaßten und aufbereiteten Signals wird das Frequenz-Amplituden-Spektrum des Signals in einem nachgeschalteten Signalanalysator bestimmt, wobei aus einer der drehzahlabhängigen Resonanzen bzw. auf den höchsten auftretenden Peaks und durch mathematische Umformung die Drehzahl bestimmt wird. Hierdurch ist zwar eine sehr exakte Erfassung der Drehzahl möglich, jedoch eignet sich eine derartige aufwendige Elektronik bezüglich Platzbedarf und Kosten nicht für die Serienanwendung im Kraftfahrzeug.

Aus der US 4,864,859 ist es bekannt, piezoelektrische Beschleunigungsaufnehmer an Gehäusen von Turboladern anzubringen. Diese bekannte Anordnung dient jedoch nicht zur Drehzahlerfassung sondern zur Bestimmung und Beseitigung von Unwuchten des roterenden Systems.

Der vorliegenden Erfindung liegt die Aufgabe Zugrunde, eine einfache und kostengünstige, für die Massenfertigung geeignete Anordnung zur Erfassung der Drehzahl von Turboladern zu schaffen.

Diese Aufgabe wird erfindungsgemäß durch die Merkmale des Anspruchs 1 gelöst.

Die erfindungsgemäße Vorrichtung hat den wesentlichen Vorteil, daß die Bauart des Turboladers für die Drehzahlerfassung keine Rolle spielt, wobei der piezoelektrische Beschleunigungsaufnehmer auch noch nachträglich in einfacher Weise am Turbolader angebracht werden kann, ohne das dieser geöffnet oder umkonstruiert werden mußte. Dabei kann die Turboladerdrehzahl auf sehr einfache und kostengünstige Weise erfaßt werden. In Verbindung mit einem erzielten robusten Aufbau bei einfacher Montage eignet sich somit diese Vorrichtung für eine kostengünstige Massenfertigung und für den rauhen Betrieb im Kraftfahrzeug, wobei auch in einfacher und kostengünstiger Weise Messungen von Turboladerdrehzahlen durchgeführt werden können. Da der Turbolader durch die Drehzahlerfassung an seiner maximalen Drehzahlgrenze betrieben werden kann und eine Zerstörung durch Überdrehzahl kaum noch ein Problem darstellt, können kostengünstigere kleinere Turbolader eingesetzt werden. Die Anfahrschwäche von Fahrzeugen verringert sich, die Höhenanpassung wird unproblematisch und es kann ein besserer Gesamtwirkungsgrad der Brennkraftmaschine im Alltagsbetrieb erreicht werden Der piezoelektrische Beschleunigungsaufnehmer ist vorteilhafterweise ein handelsüblicher Klopfsensor, der als Massenprodukt für die Klopfregelung von Brennkraftmaschinen fertig entwickelt vorliegt und auch für die Drehzahlerfassung von Turboladern kostengüstig eingesetzt werden kann.

Durch die in den Unteransprüchen aufgeführten Maßnahmen sind vorteilhafte Weiterbildungen und Verbesserungen der im Anspruch 1 angegebenen Vorrichtung möglich.

Der wenigstens eine Beschleunigungsaufnehmer wird zweckmäßigerweise am Verdichtergehäuse des Turboladers angeordnet, wo die Schwingungssignale am deutlichsten sind und die besten Voraussetzungen für eine mechanische Befestigung gegeben sind.

Zur Synchronisation einer aus zwei Turboladern bestehenden Turboladeranordnung (z.B. Bi-Turbo) an einer Brennkraftmaschine ist zweckmäßigerweise jeder dieser Turbolader mit einem Beschleunigungsaufnehmer und einer entsprechenden Auswerteschaltung verbunden. Dabei sind in der Auswerteschaltung oder im elektronischen Steuergerät Mittel zur Bildung eines Differenzdrehzahlsignals oder einer Differenzspannung vorgesehen, durch die diese Synchronisation durchführbar ist.

Die Filteranordnung ist im einfachsten Falle als Bandpaßfilter ausgebildet.

Um beispielsweise einen Schutz gegen Überspannungen zu realisieren, kann dem Beschleunigungsaufnehmer in vorteilhafter Weise eine entsprechende Schutzbeschaltung unmittelbar nachgeschaltet werden.

Bei einer technisch aufwendigeren, jedoch exakteren Realisierung der Auswerteschaltung kann der Filteranordnung ein Komparator, insbesondere ein Komparator mit Hysterese nachgeschaltet werden. Für den Fall, daß das elektronische Steuergerät als Drehzahlsignal ein analoges Spannungssignal benötigt, ist dem hierfür vorgesehenen Frequenz-Spannungswandler ein Tiefpaßfilter nachgeschaltet, um noch etwa verbliebene höherfrequente Anteile auszufiltern.

Der Beschleunigungsaufnehmer ist zweckmäßigerweise über ein Verbindungskabel mit einem Eingang des elektronischen Steuergeräts oder für Messzwecke dem Meß- und/oder Anzeigegerät verbunden, um diesem die Meßsignale zuführen zu können. Die Auswerteschaltung ist in einer ersten vorteilhaften konstruktiven Ausgestaltung im Gehäuse des Beschleunigungsaufnehmer integriert, und der Eingang des elektronischen Steuergeräts oder des Meßund/oder Anzeigegerätes ist als Frequenzeingang oder Analogeingang ausgebildet, je nachdem, ob ein Frequenz-Spannungswandler vorgesehen ist oder nicht.

In einer alternativen vorteilhaften konstruktiven Ausgestaltung ist die Auswerteschaltung in einem Stecker des Verbindungskabels oder im Verbindungskabel selbst integriert, wobei auch dann wiederum der Eingang des elektronischen Steuergeräts oder des Meß- und/oder Anzeigegeräts als Frequenzeingang oder Analogeingang ausgebildet ist.

Als dritte vorteilhafte Möglichkeit der konstruktiven Ausgestaltung kann die Auswerteschaltung auch im elektronischen Steuergerät oder im Meß- und/oder Anzeigegerät angeordnet sein, wobei dann der Eingang des elektronischen Steuergeräts oder des Meß- und/oder Steuergeräts als Eingang der Auswerteschaltung ausgebildet ist.

Ausführungsbeispiele der Erfindung sind in der Zeichnung dargestellt und in der nachfolgenden Beschreibung näher erläutert.

Es zeigen:
- Figur 1:: ein Blockschaltbild einer mit einem piezoelektrischen Beschleunigungsaufnehmer verbundenen Auswerteschaltung,
- Figur 2:: eine Anordnung, bei der die Auswerteschaltung im Gehäuse des Beschleunigungsaufnehmers integriert ist und
- Figur 3:: eine Anordnung, bei der die Auswerteschaltung in einem Stecker eines Verbindungskabels zwischen dem Beschleunigungsaufnehmer und dem elektronischen Steuergerät integriert ist.

Zur Erfassung der Turboladerdrehzahl eines nicht dargestellten Turboladers ist ein insbesondere als handelsüblicher Klopfsensor ausgebildeter piezoelektrischer Beschleunigungsaufnehmer 10 am Gehäuse dieses Turboladers fixiert, beispielsweise am Verdichtergehäuse dieses Turboladers. Das vom Beschleunigungsaufnehmer 10 erfaßte Signal ist proportional der auf dem Gehäuse des Turboladers gemessenen Beschleunigung und diese wiederum proportional der durch die rotierende Turboladerwelle erzeugten Unwucht. Da diese Unwuchtsignale synchron zur Umdrehung auftreten, ist das vom Beschleunigungsaufnehmer 10 erfaßte Signal proportional zur Drehzahl, selbstverständlich überlagert durch Störimpulse und andere Einflüsse.

Zur Auswertung und Aufbereitung des vom Beschleunigungsaufnehmer 10 abgegebenen Signals ist eine Auswerteschaltung 11 nachgeschaltet. Diese besteht aus der Reihenschaltung einer Schutzbeschaltung 12 mit einem Bandpaßfilter 13, einem Komparator 14 einem Frequenz-Spannungs-Wandler 15 und einem Tiefpaßfilter 16. Das Ausgangssignal der Auswerteschaltung 11 wird in Form eines Analogsignals einem elektronischen Steuergerät 17 zur Steuerung von Funktionen einer nicht dargestellten Brennkraftmaschine zugeführt. Ein solches Steuergerät dient in üblicher Weise beispielsweise zur Steuerung der Kraftstoffzuführung und/oder der Zündung und/oder der Getriebesteuerung oder dergleichen. Dabei wird im vorliegenden Falle auch der Turbolader gesteuert, beispielsweise durch eine Leitschaufelverstellung und/oder über die Steuerung eines Waste-Gates.

Die Meßsignale des Beschleunigungsaufnehmers 10 werden über die beispielsweise zum Schutz gegen Überspannungen dienende Schutzbeschaltung 12 geführt und dann im Bandpaßfilter 13 mit geeigneten Eckfrequenzen gefiltert. Dadurch werden die störenden Anteile herausgefiltert, so daß sich das Nutzsignal deutlich vom restlichen Signal abhebt. Dieses Nutzsignal repräsentiert die erste Lader-Ordnung, daß heißt, die Drehzahl der Turboladerwelle. Die Restunwucht des Turboladers sorgt immer für eine die Lagerung anregende Massenkraft, die mit der Drehzahl der Laderwelle umläuft und mit dem Quadrat der Drehzahl ansteigt. Durch die Ermittlung der Zeit von einem Nulldurchgang zum nächsten des ein Schwingungssignal darstellenden Nutzsignals kann man die Zeit bestimmen, die die Laderwelle für eine Umdrehung benötigt.

Falls eine Verstärkung des Signals nötig oder wünschenswert ist, kann der Schutzbeschaltung 12 eine entsprechende, nicht dargestellte Verstärkeranordnung nachgeschaltet sein. Der Verstärkungsfaktor kann dabei automatisch einstellbar sein (sogenannte Automatic Gain Control). Weiterhin kann der Bandpaßfilter 13 als durchstimmbarer Filter ausgeführt sein, das heißt, mit sich automatisch einstellenden Eckfrequenzen.

Durch den nachgeschalteten Komparator 14 mit Hysterese wird das Nutzsignal in ein Rechtecksignal umgewandelt, das dann im nachfolgenden Frequenz-Spannungs-Wandler 15 in einer dieser Frequenz, also der Drehzahl proportionale analoge Spannung umgesetzt wird. Durch die anschließende Tiefpaßfilterung im Tiefpaßfilter 16 erfolgt dann noch eine Glättung bzw. Mittelung des analogen Spannungssignals, das als Ist-Größe der Turboladerdrehzahl dem elektronischen Steuergerät 17 zugeführt wird.

In Abwandlung des dargestellten Ausführungsbespiels kann in einer einfacheren Version auch der Komparator 14 entfallen, daß heißt, das im Bandpaßfilter 13 gefilterte Nutzsignal wird direkt im Frequenz-Spannungs-Wandler 15 in eine drehzahlproportionale Spannung umgewandelt.

Für manche Anwendungen benötigt das elektronische Steuergerät 17 als Turbolader-Drehzahlsignal nicht eine analoge Spannung sondern ein Frequenzsignal. Für diesen Fall kann der Frequenz-Spannungs-Wandler 15 sowie der Tiefpaßfilter 16 entfallen. Dies bedeutet, daß die Auswerteschaltung 11 im einfachsten Falle lediglich aus einem Bandpaßfilter 13 besteht.

Für den Fall, daß an einer Brennkraftmaschine zwei Turbolader (Bi-Turbo) vorgesehen sind, wird an jedem Turbolader ein Beschleunigungsaufnehmer 10 bzw. ein Klopfsensor angebracht, der jeweils mit einer entsprechenden Auswerteschaltung 11 zu versehen ist. Hierdurch besteht die Möglichkeit der Synchronisation dieser beider Turbolader, wozu ein Differenzdrehzahlsignal bzw. ein Differenzspannungssignal aus den drehzahlproportionalen Ausgangssignalen gebildet wird.

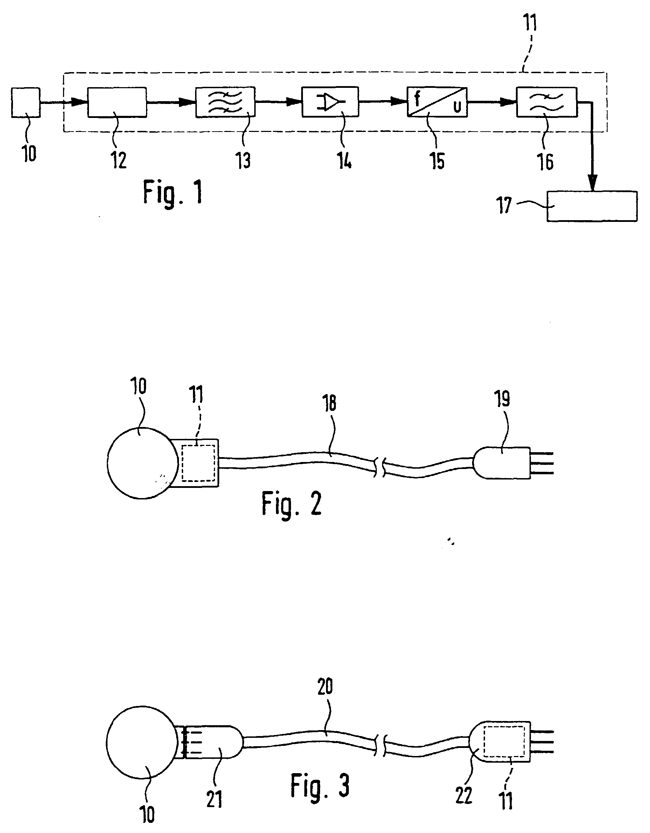

Bei der in Figur 2 dargestellten konstruktiven Ausgestaltung ist die Auswerteschaltung 10 im Gehäuse des als Klopfsensor ausgebildeten piezoelektrischen Beschleunigungsaufnehmers 10 integriert. Das Ausgangssignal dieser Auswerteschaltung 11 wird über ein Verbindungskabel 18, das an seinem vom Beschleunigungsaufnehmer 10 entfernten Ende mit einem Stecker 19 versehen ist, dem elektronischen Steuergerät 17 zugeführt, das mit einer entsprechenden Steckbuchse versehen ist, die je nach Ausführung als Frequenzeingang oder Analogeingang ausgebildet ist. Bei der in Figur 3 dargestellten alternativen Ausgestaltung ist ein Verbindungskabel 20 mit zwei endseitigen Steckern 21, 22 dargestellt. Der eine Stecker 21 wird in eine entsprechende Steckbuchse des Gehäuse des Beschleunigungsaufnehmers 10 eingesteckt, während der zweite Stecker 22 in die entsprechende Steckbuchse des elektronischen Steuergeräts 17 eingesteckt wird. Die Auswerteschaltung 11 ist im Stecker 22 integriert. Alternativ hierzu kann sie selbstverständlich auch im Stecker 21 oder an einer Zwischenposition im Kabel integriert sein. Bei einer dritten, nicht dargestellten Variante kann die Auswerteschaltung 11 auch im elektronischen Steuergerät 17 angeordnet sein. Das Verbindungskabel 18 bzw. 20 wird dann mittels eines Steckers in eine Eingangsbuchse dieser Auswerteschaltung 11 eingesteckt.

Die Auswerteschaltung 11 kann insgesamt in einem IC-Baustein integriert sein, so daß die Unterbringung im Gehäuse des Beschleunigungsaufnehmers 10 oder in einem Stecker 21, 22 oder im Verbindungskabel 20 kein Problem darstellt.

Die erfindungsgemäße Vorrichtung zur Drehzahlerfassung kann auch zu reinen Meßzwecken im Labor oder am Kraftfahrzeug eingesetzt werden. In diesem Falle ist die Auswerteschaltung nicht mit dem elektronischen Steuergerät 17, sondern mit einem nicht dargestellten Meß- und/oder Anzeigegerät verbunden, um die Drehzahl zu erfassen und anzeigen zu können. Der Beschleunigungsaufnehmer 10 kann auch hier über ein entsprechendes Kabel 18 bzw. 20 mit diesem Meß- und/oder Anzeigegerät verbunden sein, wobei die Auswerteschaltung 11 auch hier im Meß- und/oder Anzeigegerät integriert sein kann.

## Patentansprüche

1. Vorrichtung zur Drehzahlerfassung von Turboladern an Brennkraftmaschinen, mit wenigstens einem am Turbolader fixierten als Klopfsensor ausgebildeten piezoelektronischen Beschleunigungsaufnehmer (10) und mit einer eine analoge Filteranordnung (13) zur Filterung der Ausgangssignale des Beschleunigungsaufnehmers (10) aufweisenden Auswerteschaltung (11), wobei die Ausgangssignale der Filteranordnung (13) über einen FrequenzSpannungs-Wandler (15) in Form einer analogen Spannung oder direkt in Form von Frequenzsignalen als Eingangssignale für ein elektronisches Steuergerät (17) der Brennkraftmaschine oder für ein Meß- und/oder Anzeigegerät vorgesehen sind.

2. Vorrichtung nach Anspruch 1, dadurch gekennzeichnet, daß der wenigstens eine Beschleunigungsaufnehmer (10) am Verdichtergehäuse des Turboladers angeordnet ist.

3. Vorrichtung nach Anspruch 1 oder 2, dadurch gekennzeichnet, daß zur Synchronisation einer aus zwei Turboladern bestehenden Turboladeranordnung an einer Brennkraftmaschine jeder dier Turbolader mit einem Beschleunigungsaufnehmer (10) versehen ist.

4. Vorrichtung nach Anspruch 3, dadurch gekennzeichnet, daS in der Auswerteschaltung (11) oder im elektronischen Steuergerät (17) Mittel zur Bildung eines Differenzdrehzahlsignals oder einer Differenzspannung vorgesehen sind.

5. Vorrichtung nach einem der vorhergehenden Ansprüche, dadurch gekennzeichnet, daS die Filteranordnung (13) als Bandpaßfilter ausgebildet ist.

6. Vorrichtung nach einem der vorhergehenden Ansprüche, dadurch gekennzeichnet, daS dem Beschleunigungsaufnehmer (10) eine Schutzbeschaltung (12) unmittelbar nachgeschaltet oder zugeordnet ist.

7. Vorrichtung nach einem der vorhergehenden Ansprüche, dadurch gekennzeichnet, daß in der Auswerteschaltung (11) der Filteranordnung (13) ein Komparator (14) insbesondere ein Komparator (14) mit Hysterese, nachgeschaltet ist.

8. Vorrichtung nach einem der vorhergehenden Ansprüche, dadurch gekennzeichnet, daS in der Auswerteschaltung (11) der Frequenz-Spannungs-Wandler (15) dem Komparator (14) oder der Filteranordnung (13) nachgeschaltet ist.

9. Vorrichtung nach einem der vorhergehenden Ansprüche, dadurch gekennzeichnet, daS in der Auswerteschaltung (11) dem FrequenzSpannungs-Wandler (15) ein Tiefpaßfilter (16) nachgeschaltet ist.

10. Vorrichtung nach einem der vorhergehenden Ansprüche, dadurch gekennzeichnet, daß der Beschleunigungsaufnehmer (10) über ein Verbindungskabel (18, 20) mit einem Eingang des elektronischen Steuergerätes (17) oder des Meß- und/oder Anzeigegeräts verbunden ist.

11. Vorrichtung nach Anspruch 10, dadurch gekennzeichnet, daß die Auswerteschaltung (11) im Gehäuse des Bechleunigungsaufnehmers (10) integriert ist, und daß der Eingang des elektronischen Steuergeräts (17) oder des Meß- und/oder Steuergeräts als Frequenzeingang oder als Analogeingang ausgebildet ist.

12. Vorrichtung nach Anspruch 10, dadurch gekennzeichnet, daS die Auswerteschaltung (11) in einem Stecker (22) des Verbindungskabels (20) oder im Verbindungskabel integriert ist, und daS der Eingang des elektronischen Steuergeräts (17) oder des Meß- und/oder Anzeigegeräts als Frequenzeingang oder Analogeingang ausgebildet ist.

13. Vorrichtung nach Anspruch 10, dadurch gekennzeichnet, daß die Auswerteschaltung (11) im elektronischen Steuergerät (17) oder im Meß- und/oder Anzeigegerät angeordnet ist, und daß der Eingang des elektronischen Steuergeräts (17) oder des Meßund/oder Anzeigegeräts als Eingang der Auswerteschaltung (11) ausgebildet ist.
